# EUROPÄISCHE PATENTSCHRIFT

(11) **EP 4 498 975 B1**
(45) Veröffentlichungstag und Bekanntmachung des Hinweises auf die Patenterteilung: **06.08.2025**
(21) Anmeldenummer: 24733889.0
(22) Anmeldetag: 13.06.2024
(51) Int. Cl.: A61C 1/14, A61C 1/05

(54) **MEDIZINISCHES TURBINEN-HANDSTÜCK**
MEDICAL TURBINE HANDPIECE
PIÈCE À MAIN DE TURBINE MÉDICALE

(30) Priorität: 22.06.2023 DE 102023116387
(43) Veröffentlichungstag der Anmeldung: 05.02.2025
(73) Patentinhaber: KaVo Dental GmbH, 88400 Biberach an der Riss (DE)
(72) Erfinder: RÖSCH,Thomas, 88447 Warthausen (DE)
(74) Vertreter: Thun, Clemens
(86) Internationale Anmeldenummer: PCT/EP2024/066339
(87) Internationale Veröffentlichungsnummer: WO 2024/260834

(56) Entgegenhaltungen:
- EP-A2- 0 689 801
- EP-A2- 0 689 801
- CN-A- 106 344 180
- CN-A- 106 344 180
- DE-A1- 102005 027 263
- DE-A1- 102005 027 263

## Beschreibung

Die vorliegende Erfindung betrifft ein medizinisches, insbesondere ein dentalmedizinisches Turbinen-Handstück mit einer Griffhülse und einem Kopfstück, welches an einem vorderen Ende der Griffhülse angeordnet ist. Dabei betrifft die Erfindung Maßnahmen, mit deren Hilfe der Kopfbereich des Handstücks effizient gegenüber der Umgebung abgedichtet werden kann.

Dentalinstrumente, die zur Untersuchung oder zur Behandlung innerhalb des Mundraums von Patienten vorgesehen sind, müssen vor ihrer Verwendung gereinigt und sterilisiert werden, um das Übertragen von Keimen zu verhindern. Dementsprechend ist es bekannt, derartige Instrumente nach ihrem Gebrauch in entsprechenden Vorrichtungen einerseits zu reinigen sowie andererseits zu sterilisieren, um Schmutzpartikel zu entfernen sowie gegebenenfalls vorhandene Keime abzutöten. Derartige Wiederaufbereitungsprozesse sind dabei derart ausgeführt, dass sie nicht nur auf die Außenfläche des Dentalinstruments wirken, sondern auch innerhalb des Innenbereichs wirksam sind.

Trotz dieser Maßnahmen ist es sinnvoll, bereits von vornherein das Eindringen von Keimen in den Innenbereich eines Handstücks möglichst zu vermeiden. Diese Problematik stellt sich insbesondere bei den bereits erwähnten dentalmedizinischen Turbinen-Handstücken, bei denen ein im Kopfbereich des Handstücks aufgenommener Läufer mittels Druckluft angetrieben wird. Derartige Handstücke weisen in der Regel auch ein Haltemittel zur lösbaren Halterung eines Behandlungswerkzeugs sowie ein zugehöriges Betätigungssystem auf, mit dem das Werkzeug, beispielsweise ein zahnärztlicher Bohrer, wahlweise gehalten oder gelöst werden kann. In diesem Fall sollte ein potenziell keimbelastetes Fluid vom inneren Läuferraum sowie dem Betätigungssystem im Instrument ferngehalten werden, da dieses eingesaugte Fluid zu einem späteren Zeitpunkt auch teilweise wieder ausgeblasen wird und damit in besonderem Maße die Gefahr einer Übertragung von Keimen besteht. Zudem verkürzen in den Innenraum eindringende Fremdkörper sowie korrosionsfördernde Fluide die Lebensdauer der im Handstückkopf vorgesehenen Lager zur drehbaren Halterung sowie aller anderen beweglichen Bauteile.

Bei den erwähnten zahnärztlichen Turbinen-Handstücken ergibt sich nunmehr das Problem, dass während der Verwendung des Handstücks in dessen Innenraum zumindest zeitweise gegenüber der Umgebung ein Überdruck, teilweise allerdings auch ein Unterdruck auftreten kann. Im aktiven Zustand des Handstücks, in dem also der Turbinenläufer mithilfe eines unter Druck stehenden Fluids angetrieben wird, herrscht im Innenraum des Kopfbereichs in der Regel ein gewisser Überdruck, der zur Folge hat, dass daran befindliche Luft nach außen verdrängt wird, was an sich kein Problem darstellt. Wird allerdings die Druckluftzufuhr gestoppt, um den Betrieb zu unterbrechen, so tritt während einer kurzen Abbremsphase des Läufers zeitweise ein Unterdruck im Kopfbereich auf, der zur Folge haben kann, dass Umgebungsluft angesaugt wird. Dies führt zu der Gefahr, dass wiederholt potenziell keimbelastete Luft angesaugt und abgegeben wird, was unter allen Umständen vermieden werden sollte.

Aus dem Stand der Technik sind deshalb Maßnahmen bekannt, mit deren Hilfe versucht wird, den Innenraum des Kopfbereichs eines zahnärztlichen Turbinen-Handstücks gegenüber der Umgebung abzudichten. Wie nachfolgend noch näher erläutert wird, ist in diesem Zusammenhang bekannt, Lippendichtungen bzw. Dichtmanschetten zu verwenden, die eine Dichtlippe bilden, welche auf den Außenumfang des drehbar gelagerten Halteelements für das Behandlungswerkzeug einwirken. Diese Dichtlippen haben eine Ventilfunktion dahingehend, dass sie während des Betriebs des Handstücks aufgrund des im Innenraum vorliegenden Überdrucks öffnen, also nicht gegenüber dem sich drehenden Halteelement wirksam sind. Dies ist insofern unproblematisch, als aufgrund des Überdrucks im Handstückkopf nicht die Gefahr des Ansaugens von Umgebungsluft besteht. Wird nunmehr die Druckluftzufuhr gestoppt, so hat dies zur Folge, dass aufgrund des Druckabfalls im Innenbereich die Dichtlippe schließt und am Außenumfang des Halteelements anliegt. Hierdurch wird nicht nur eine Abdichtung erzielt, sondern der Rotor wird durch die anliegende Dichtlippe auch kurzzeitig abgebremst. Derartige Lippendichtungen werden beispielsweise aus Nitril oder Silikon hergestellt und unterliegend aufgrund des oben beschriebenen Mechanismus einen gewissen Verschleiß. Ein Dentalhandstück mit derartigen Lippendichtungen ist beispielsweise aus der DE 692 01 133 bekannt. Auch die EP 3 653 896 B1 zeigt eine Dentalturbine, bei der zwischen dem Außenlagerring und dem Innenlagerring eines Lagers für die drehbare Werkzeughalterung eine Dichtlippe in der zuvor beschriebenen Art vorgesehen ist.

Weiterhin offenbart die CN 106 344180 eine Dentalturbine, bei der deckelseitig, also dem Behandlungswerkzeug gegenüberliegend ein elastisches Dichtelement im Gehäuse verbaut ist, welches als sogenannter Rücksaugstopp fungiert. Das Dichtelement liegt ebenso wie die oben beschriebene Lippendichtung am Rotor an, was wiederum dazu führt, dass beim Anfahren bzw.

Abbremsen der Turbine ein Schleifeffekt auftritt der zu einem Verschleiß des Dichtelements führt.

Ferner beschreibt auch die EP 0 689 801 A2 eine Dentalturbine, bei der die Kugellager zur drehbaren Halterung des Haltemittels für das Werkzeug abgedichtet sind. Die hierbei zum Einsatz kommenden Dicht- bzw. Sperrelemente sind allerdings wiederum zwischen sich zueinander drehenden Komponenten wirksam und unterliegen somit einem gewissen Verschleiß, oder bilden lediglich eine Labyrinthdichtung, welche gegen das Eindringen von keimbelasteter Luft eher unzureichend ist.

Schließlich ist aus der EP 3 518 814 B1 ein dentalmedizinisches Turbinenhandstück entsprechend dem Oberbegriff des Anspruchs 1 bekannt.

Ausgehend von diesem Stand der Technik liegt der vorliegenden Erfindung die Aufgabenstellung zugrunde, eine verbesserte Möglichkeit zur Abdichtung des Kopfbereichs eines medizinischen Turbinen-Handstücks anzugeben.

Die Aufgabe wird durch ein Turbinen-Handstück, welches die Merkmale des Anspruchs 1 aufweist, gelöst. Vorteilhafte Weiterbildungen der Erfindung sind Gegenstand der abhängigen Ansprüche.

Die erfindungsgemäße Lösung betrifft insbesondere eine Maßnahme, die im deckelseitigen Kopfbereich des Handstücks vorgesehen ist, um hier eine Abdichtung gegenüber der Umgebung zu erzielen. Wie bereits erwähnt ist üblicherweise das Behandlungswerkzeug, also beispielsweise ein zahnärztlicher Bohrer, nicht fix an dem Handstück befestigt, sondern wird lösbar von einem sich drehenden Haltemittel gehalten, wobei im Inneren des Kopfstücks entlang der Drehachse ein Löseelement angeordnet ist, welches dazu ausgebildet ist, mit dem Haltemittel zu interagieren, derart, dass das Löseelement bei einer Interaktion mit dem Haltemittel die Halterung des Behandlungswerkzeugs löst. Eine Betätigung des Löseelements erfolgt dabei üblicherweise über einen der Werkzeugaufnahmeöffnung gegenüberliegend angeordneten Deckel des Kopfstücks, der in Richtung der Drehachse zwischen einer Ruhestellung, in der der Deckel von dem Löseelement beabstandet ist, und einer Betätigungsstellung, in der der Deckel auf das Löseelement drückt, um die Halterung des Behandlungswerkzeugs zu lösen, verstellbar ist.

Die erfindungsgemäße Lösung sieht nunmehr vor, in diesem Bereich eine Abdichtung vorzunehmen, wobei hierzu ein Dichtelement genutzt wird, welches zwischen dem Deckel und einem stationären Lagerelement, welches das Haltemittel ringartig umgibt, wirksam ist. Das Dichtelement ist dabei an einem der beiden Komponenten befestigt und drückt mit Vorspannung gegen eine Dichtfläche des anderen Elements, wobei das Dichtelement als Ventil ausgeführt und dazu ausgebildet ist, sich im aktivierten Zustand des Handstücks von der Dichtfläche zu lösen. Der Vorteil der erfindungsgemäßen Lösung besteht dabei darin, dass das Dichtelement selbst nicht rotiert und auch keine rotierenden Bauteile berührt. Ein abtragender Verschleiß findet also im Gegensatz zu den bislang bekannten Lösungen nicht statt, sodass einerseits eine wirksame Dichtung erzielt werden kann und andererseits ein Verschleiß der Dichtung verhindert wird.

Gemäß der vorliegenden Erfindung wird also ein medizinisches, insbesondere dentalmedizinisches Turbinen-Handstück mit einer Griffhülse und einem Kopfstück vorgeschlagen,
wobei das Kopfstück an einem vorderen Ende der Griffhülse angeordnet ist und eine Werkzeugaufnahmeöffnung aufweist,
wobei die Griffhülse eine Fluidleitung zur Zufuhr eines Fluids zum Antrieb eines Turbinenrades aufweist,
wobei im Inneren des Kopfstücks das Turbinenrad und ein Haltemittel zur drehbaren Halterung eines Behandlungswerkzeugs angeordnet sind,
wobei das Haltemittel entlang einer Drehachse für das Behandlungswerkzeug angeordnet ist,
wobei im Inneren des Kopfstücks entlang der Drehachse ferner ein Löseelement angeordnet ist, welches dazu ausgebildet ist, mit dem Haltemittel zu interagieren, wobei das Löseelement bei einer Interaktion mit dem Haltemittel die Halterung des Behandlungswerkzeugs löst, und
wobei das Kopfstück weiterhin einen der Werkzeugaufnahmeöffnung gegenüberliegenden Deckel aufweist, der in Richtung der Drehachse zwischen einer Ruhestellung, in der der Deckel von dem Löseelement beabstandet ist, und einer Betätigungsstellung, in der der Deckel auf das Löseelement drückt, um die Halterung des Behandlungswerkzeugs zu lösen, verstellbar ist.

Erfindungsgemäß ist ferner in dem Kopfstück ein Dichtelement angeordnet, welches zwischen dem Deckel und einem stationären Lagerelement, welches das Haltemittel ringartig umgibt, wirksam ist, wobei das Dichtelement entweder an dem Deckel oder dem Lagerelement befestigt ist und mit Vorspannung gegen eine Dichtfläche des Lagerelements bzw. des Deckels drückt, und wobei das Dichtelement als Ventil ausgeführt und dazu ausgebildet ist, sich im aktivierten Zustand des Handstücks von der Dichtfläche zu lösen.

Das Dichtelement ist hierbei vorzugsweise als sogenanntes Schirmventil mit einem kreisförmigen Außenumfang ausgebildet, der dann gegen die entsprechende Dichtfläche desjenigen Elements, an dem das Dichtelement nicht befestigt ist, drückt. Vorzugsweise ist hierbei das Dichtelement derart ausgebildet, dass es bei einem Überdruck des Fluids von etwa 0,3 bar öffnet. Dieser Wert stellt sicher, dass das Dichtelement während des Betriebs des Handstücks, bei dem in etwa ein Überdruck von 0,5 bar gegenüber der Außenatmosphäre vorliegt, öffnet. Andererseits ist sichergestellt, dass während des Abbremsvorgangs sowie auch im Ruhezustand des Handstücks der Kopfbereich zuverlässig abgedichtet wird.

Das erfindungsgemäße Dichtelement ist hierbei vorzugsweise ringartig ausgebildet und weist eine zentrale Öffnung auf, die mit ihrem Rand an dem Deckel bzw. dem Lagerelement anliegt. Hierbei kann beispielsweise vorgesehen sein, dass der Deckel bzw. das Lagerelement eine umlaufende Nut aufweist, in welcher das Dichtelement mit dem Randbereich der zentralen Öffnung eingepresst ist. Auf diese Weise wird eine zuverlässige und zugleich abdichtende Befestigung des Dichtelements an dem entsprechenden Bauteil ermöglicht. Alternativ hierzu wäre es auch möglich, dass das Dichtelement mit Hilfe eines separaten, insbesondere ringartigen Befestigungselements klemmend an dem Deckel bzw. dem Lagerelement gehalten ist.

Vorzugsweise erstreckt sich das Dichtelement ausgehend von dem Deckel oder dem Lagerelement, an dem es befestigt ist, in Richtung der Dichtfläche des Lagerelements bzw. des Deckels derart, dass der Randbereich des Dichtelements im geschlossenen Zustand des Ventils an der Dichtfläche anliegt. Insbesondere kann hierzu das Dichtelement konkav gewölbt oder konkav abgewinkelt ausgebildet sein.

Alternativ zu der zuvor beschriebenen Ausführungsform wäre es auch denkbar, das Dichtelement rotationsförmig mit einem abgewinkelten, ringartig umlaufenden Profil auszubilden. Ein erster, vorzugsweise nach außen weisender Schenkel des Profils ist hierbei im Wesentlichen parallel zu dem Deckel ausgerichtet und an diesem befestigt, während hingegen ein zweiter Schenkel des Profils sich im Wesentlichen senkrecht zum ersten Schenkel erstreckt und dazu ausgebildet ist, mit Vorspannung gegen eine die Dichtfläche bildende Seitenfläche des Lagerelements zu drücken. Dieser zweite Schenkel erfüllt dann die Ventilfunktion und wird im aktivierten Zustand des Handstücks seitlich ausgelenkt, wobei dies wie oben erwähnt wiederum vorzugsweise bei einem Überdruck von etwa 0,3 bar geschieht.

Dabei besteht einerseits die Möglichkeit, das Dichtelement einstückig aus einem geeigneten flexiblen Material zu bilden. Andererseits wäre es auch denkbar, das Dichtelement mehrteilig mit einem Innenbereich zur Befestigung an dem Deckel bzw. dem Lagerelement sowie einem an dem Innenbereich befestigten ringartigen Dichtbereich auszubilden, der aus einem flexiblen Material besteht. Dieses flexible Material kann dabei insbesondere durch ein Elastomer gebildet sein, vorzugsweise durch ein temperaturbeständiges Elastomer, besonders bevorzugt ein Fluorelastomer, wobei die Dicke des flexiblen Materials insbesondere im Bereich von 0,2 mm +/- 0,1 mm liegt.

Das Lagerelement kann beispielsweise durch den stationären Außenlagerring eines das Haltemittel drehbar haltenden Drehlagers gebildet sein. Alternativ hierzu wäre es auch denkbar, das Lagerelement durch ein sogenanntes Lagersitzelement zu bilden, welches ein Drehlager zur drehbaren Halterung des Haltemittels hält.

Der Deckel, der - wie eingangs erläutert - auch als Betätigungselement zum Betätigen des Löseelements verwendet wird, ist hierbei vorzugsweise mithilfe eines Federelements, insbesondere mittels einer Spiralfeder in die Ruhestellung vorgespannt gelagert, wobei das Dichtelement - bzw. im Falle des ringartig abgewinkelten Profils der senkrecht zum Deckel ausgerichtete zweite Schenkel - in einer Projektion senkrecht zur Drehachse innerhalb des Federelements angeordnet ist. Durch diese Maßnahme ist sichergestellt, dass der erfindungsgemäße Dichtmechanismus die Funktion des Deckels als Betätigungselement zum Betätigen des Löseelements nicht beeinträchtigt. Ferner führt diese Maßnahme dazu, dass die Abdichtung des Handstückkopfs nicht zu einer Vergrößerung der Abmessungen des Handstücks führt. Stattdessen erlaubt die erfindungsgemäße Lösung eine äußerst kompakte Gestaltung des Handstückkopfs.

An der dem Deckel des Handstückkopfs gegenüberliegenden Seite ist eine vergleichbare Vorgehensweise zum Abdichten allerdings nicht realisierbar, da hier grundsätzlich das Dichten gegenüber sich bewegenden, insbesondere rotierenden Bauteilen erfolgen muss. Dementsprechend kann vorgesehen sein, dass dem Deckel gegenüberliegend ein weiteres, ringartiges Dichtelement vorgesehen ist, welches dann analog zu der im Stand der Technik beschriebenen Vorgehensweise zwischen dem Außenumfang des Haltemittels oder eines das Haltemittel haltenden Drehteils sowie einem umgebenden Wandbereich des Kopfstücks in Form einer Dichtlippe wirksam ist. Diese Dichtung unterliegt dann wiederum zwangsläufig einem gewissen Verschleiß, stellt allerdings in Ergänzung zu der erfindungsgemäßen Abdichtungsmaßnahme am gegenüberliegenden Endes des Kopfstücks sicher, dass der Kopfbereich des Dentalhandstücks möglichst optimal gegenüber der Umgebung abgedichtet ist, insbesondere während der Abbremsphase des Handstücks sowie im Ruhezustand.

Nachfolgend soll die Erfindung anhand der beiliegenden Zeichnung näher erläutert werden. Es zeigen:
- Figur 1: die Schnittdarstellung eines ersten Ausführungsbeispiels eines erfindungsgemäßen medizinischen Turbinen-Handstücks, wobei das durch das Dichtelement gebildete Ventil geöffnet ist;
- Figur 2: eine weitere Schnittdarstellung eines erfindungsgemäßen Handstücks, wobei die Befestigung des Dichtelements teilweise derjenigen von Figur 1 entspricht und das durch das Dichtelement gebildete Ventil geschlossen ist;
- Figur 3: eine vergrößerte Ansicht eines Teilbereichs eines erfindungsgemäßen Handstücks, die eine zweite Möglichkeit zur Befestigung des Dichtelements zeigt;
- Figur 4: die Schnittdarstellung eines dritten Ausführungsbeispiels eines erfindungsgemäßen Turbinen-Handstücks;
- Figuren 5 und 6: Ansichten eines vierten Ausführungsbeispiels eines Turbinen-Handstücks, wobei das durch das Dichtelement gebildete Ventil geöffnet bzw. geschlossen ist; und
- Figur 7: ein fünftes Ausführungsbeispiel eines erfindungsgemäßen Turbinen-Handstücks in Schnittdarstellung.

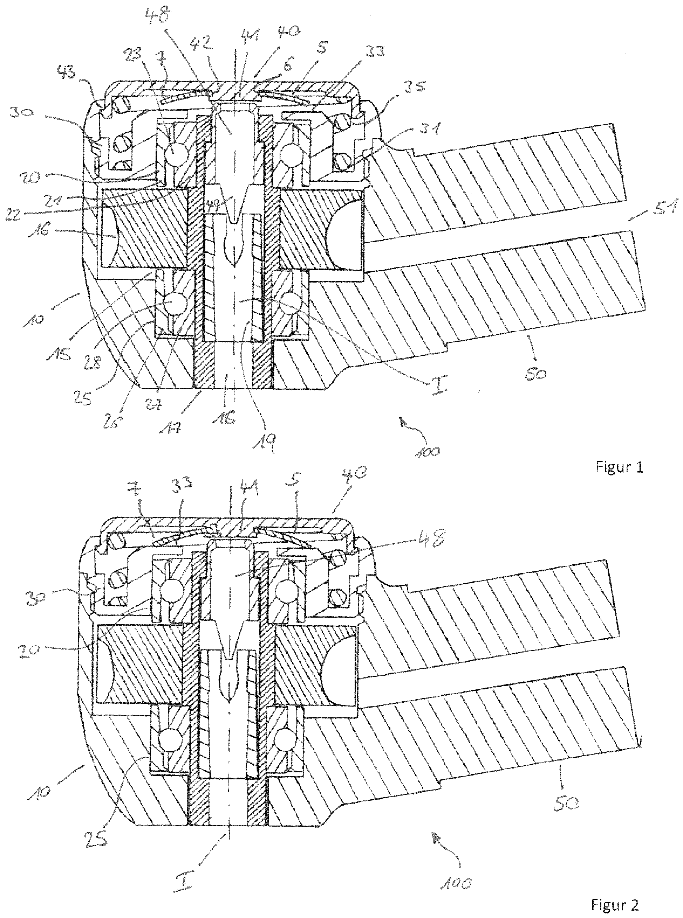

Figur 1 zeigt in Schnittdarstellung den vorderen Bereich eines erfindungsgemäßen dentalen Handstücks 100, welches durch eine längliche Griffhülse 50 mit einem am vorderen Ende angeordneten Kopfstück 10 gebildet ist. Es handelt sich wie bereits erwähnt um ein Turbinen-Handstück, welches also mittels Druckluft angetrieben wird, die von einer zahnärztlichen Versorgungseinheit zur Verfügung gestellt wird. Hierzu erstreckt sich entlang der Griffhülse 50 eine Fluidleitung 51, über welche die Druckluft vom rückseitigen Ende bis zu dem Kopfbereich 10 mit der darin angeordneten Turbine geleitet wird. In analoger Weise verläuft entlang der Griffhülse 50 auch eine von dem Kopfbereich 10 wegführende Luftleitung, über welche die den Turbinenraum verlassende Luft wieder abgeführt wird. Diese Abluft-Leitung ist in der hier gewählten Darstellung nicht erkennbar.

Innerhalb des Kopfbereichs ist dann ein sogenannter Turbinenläufer 15 angeordnet, der durch die über die Zuführungsleitung 51 zugeführte Druckluft angetrieben wird, um hierdurch ein zahnärztliches Behandlungswerkzeug, beispielsweise einen zahnärztlichen Bohrer in Rotation zu versetzen. Der Turbinenläufer 15 wird durch ein etwa hohlzylinderförmiges, sich entlang einer Rotationsachse I erstreckendes Drehteil 17 gebildet, welches in etwa auf mittlerer Höhe von einem Turbinenrad 16 umgeben ist. Gegebenenfalls können Drehteil 17 und Turbinenrad 16 auch einstückig ausgeführt sein, wobei in jedem Fall eine feste Verbindung dahingehend besteht, dass die durch die Druckluft hervorgerufene Drehung des Turbinenrads 16 auf das Drehteil 17 und letztendlich auf das in den Figuren nicht dargestellte Behandlungswerkzeug übertragen wird. Die drehbare Lagerung der soeben beschriebenen Komponenten innerhalb des Kopfstücks 10 des Handstücks erfolgt dabei mithilfe zweier Lager 20 bzw. 25, die in Rotationsrichtung I gesehen zu beiden Seiten des Turbinenrads 16 angeordnet sind und jeweils einen Außenlagerring 21 bzw. 26, einen Innenlagerring 22 bzw. 27 sowie dazwischen angeordnete Wälzkörper z.B. in Form von Kugeln 23 bzw. 28 aufweisen.

Das Behandlungswerkzeug, also z.B. der zahnärztliche Bohrer soll hierbei auswechselbar in dem Drehteil 17 aufgenommen sein, wobei hierfür innerhalb des Drehteils eine sogenannte Spannhülse 19 vorgesehen ist. Das Werkzeug wird von der Unterseite des Handstückkopfs 10 her mit seinem Werkzeugschaft in die Werkzeugaufnahmeöffnung 18 des Drehteils 17 eingeführt, bis dessen Endbereich innerhalb der Spannhülse 19 angeordnet ist. Die sich mit dem Drehteil 17 mitdrehende Spannhülse 19 umgreift dann den Endbereich des Behandlungswerkzeugs derart, dass sich dieses mit dem Drehteil 17 dreht.

Um das in der Klemmhülse 19 aufgenommene Behandlungswerkzeug wieder entnehmen zu können, ist im oberen Bereich des Drehteils 17 ein Löseelement 48 angeordnet, welches an seiner Unterseite einen keil- bzw. pyramidenartigen Vorsprung 49 aufweist. Das Löseelement 48 dreht sich gemeinsam mit dem Drehteil 17, ist allerdings entlang der Drehachse I verschiebbar, sodass bei entsprechendem Herabdrücken des Betätigungselements 40 der keilartige Vorsprung 49 in den oberen Endbereich der Spannhülse 19 eingreift. Hierdurch wird diese leicht gespreizt, sodass die auf den Schaft des Behandlungswerkzeugs ausübende Klemmkraft gelöst bzw. zumindest derart reduziert wird, dass das Behandlungswerkzeug entnommen werden kann.

Das Betätigen des Löseelements 48, insbesondere also das Herabdrücken des Löseelements 48 zum Interagieren mit der Spannhülse 19 erfolgt mithilfe eines am oberen Ende des Kopfteils 10 angeordneten Deckels 40, der die Oberseite des Kopfteilgehäuses abschließt und derart mit einem umlaufenden Randbereich 43 in dem Gehäuse des Kopfstücks 10 aufgenommen ist, dass er entgegen der Kraft einer Spiralfeder 35 nach unten gedrückt werden kann. In dem in Figur 1 erkennbaren entlasteten Zustand, in dem also der Deckel 40 durch die Spiralfeder 35 bis zu einem oberen Anschlag gedrückt wird, ist hierbei der Deckel 40 mit einem zentralen Vorsprung 40 beabstandet von dem Löseelement 48 angeordnet. Hierdurch wird vermieden, dass im aktiven Zustand des Handstücks, wenn sich also das Drehteil 17 gemeinsam mit dem Löseelement 48 dreht, Reibung zwischen dem Deckel 40 und dem Löseelement 48 auftritt, die einerseits zu einer ungewünschten Bremswirkung und andererseits zu einer sehr schnellen Abnutzung des Deckels 40 führen würde. Erst beim Herabdrücken des Deckels 40, was üblicherweise im nicht aktivierten Zustand des Handstücks erfolgt, gelangt der zentrale Vorsprung 41 in Anlage gegen die Oberseite des Löseelements 48, um wie beschrieben letztendlich die klemmende Halterung des Behandlungswerkzeugs zu lösen.

Die bislang beschriebenen Eigenschaften des erfindungsgemäßen Handstücks 100 sind auch bei bereits aus dem Stand der Technik bekannten Handstücken vorgesehen. Nachfolgend sollen nunmehr die erfindungsgemäßen Maßnahmen zur effizienten Abdichtung des Innenbereichs des Kopfstücks 10 näher erläutert werden.

Eine Abdichtung des Kopfbereichs 10 ist insofern wünschenswert als das Reinigen und Sterilisieren des Innenbereichs im Vergleich zu den Außenflächen des Handstücks 100 offensichtlich deutlich schwieriger ist. Hinzu kommt, dass wie eingangs erläutert, währendes Betriebs des Handstücks, wenn also über die Fluidleitung 51 Druckluft zum Antreiben des Turbinenrads 16 in das Kopfstück 10 eingeleitet wird, im Innenraum des Handstücks ein gewisser Überdruck im Vergleich zur Umgebung vorliegt. Typischerweise werden derartige Turbinen-Handstücke bei Geschwindigkeiten von bis zu 300.000 Umdrehungen pro Minute betrieben, wobei sich dann ein Überdruck von etwa 0,5 bar ergibt.

Wird andererseits die Druckluftzufuhr beendet, so bremst der Turbinenläufer 15 ausgehend von der hohen Drehzahl auf 0 ab und es kann während dieser Bremsphase für einen Zeitraum von ca. 1 Sekunde ein Unterdruck innerhalb des Handstückkopfs 10 auftreten. Dieser würde dazu führen, dass Außenluft angesogen wird, was jedoch unter allen Umständen vermieden werden sollte. Da sich nämlich das Handstück 100 zu diesem Zeitpunkt oftmals noch im Mundbereich bzw. in der Nähe des Mundbereichs eines Patienten befindet, würde dies zu der Gefahr führen, dass potenziell keimbelastete Luft in den Innenraum des Kopfbereichs 10 gelangt. Abgesehen davon, dass hier wie bereits erwähnt eine Reinigung und effiziente Sterilisation mit einem höheren Aufwand verbunden ist, besteht auch die Gefahr, dass durch derart eingesogene Luft Komponenten der Lager 20 bzw. 25 beschädigt werden.

Wie nachfolgend näher erläutert wird, ist aus dem Stand der Technik bekannt, zum Erzielen der angestrebten Abdichtung Dichtlippen zu verwenden, welche zwischen dem Gehäuse des Kopfstücks 10 und dem Außenumfang des Drehteils 17 angeordnet sind. Derartige Dichtelemente wirken also einerseits zwischen einem stationären sowie andererseits einem sich drehenden Bauteil, was aufgrund des hierbei zwangsläufig auftretenden Verschleißes als nachteilig angesehen wird. Mithilfe der vorliegenden Erfindung wird nunmehr eine Lösung zur Verfügung gestellt, die es ermöglicht, den Kopfbereich des Handstücks 10 zumindest im Bereich des Deckels 40 effizient abzudichten, wobei allerdings die Nachteile der aus dem Stand der Technik bekannten Lösungen vermieden werden.

Erfindungsgemäß ist nämlich nunmehr vorgesehen, dass zwar wiederum ein Dichtelement 5 zum Einsatz kommt, welches insbesondere den oberen Bereich des Handstückkopfs 10 abdichtet. Nunmehr allerdings ist dieses Dichtelement 5 derart ausgeführt, dass es lediglich zwischen stationären, also sich nicht drehenden Komponenten des Handstücks 100 wirksam ist, sodass die oben erläuterte Problematik eines erhöhten Verschleißes vermieden wird.

Bei dem in den Figuren 1 und 2 dargestellten ersten Ausführungsbeispiel (in Figur 2 entspricht lediglich die rechte Seite des Dichtelements 5 dem ersten Ausführungsbeispiel) ist hierbei das Dichtelement 5 in Form eines ringartigen, aus einem flexiblen Material bestehenden Dichtteils ausgeführt. Das lediglich in Schnittdarstellung gezeigte Dichtelement 5 weist also eine zentrale Öffnung auf, über welche im vorliegenden Fall eine Befestigung an dem Deckel 40 erfolgt. Genau genommen ist vorgesehen, dass der bereits erwähnte Vorsprung 41 des Deckels 40 mit einer umlaufenden Nut 42 bzw. einem entsprechenden Einstich versehen ist, in welche das Dichtelement 5 mit dem Randbereich einer zentralen Öffnung eingepresst ist, so dass eine formschlüssige Verbindung erzielt wird. Das Dichtelement 5 liegt hierbei klemmend und somit abgedichtet am Umfang des Vorsprungs 41 des Deckels 40 an, sodass diesbezüglich eine entsprechende Abdichtung erzielt wird.

Gleichzeitig erstreckt sich das Dichtelement 5 ausgehend von dem Befestigungsbereich an dem Vorsprung 41 des Deckels 40 konkav gewölbt oder gegebenenfalls auch konkav abgewinkelt nach außen, derart, dass ein kreisförmiger Randbereich 7 sich in Richtung eines sogenannten Lagersitzelements 30 erstreckt, dessen Funktion in erster Linie darin besteht, dass obere Lager 20 zu halten. Insbesondere dient das ringartige Lagersitzelement 30, welches beispielsweise in den oberen Bereich des Kopfgehäuses eingeschraubt ist, der Halterung des äußeren Laufrings 21 des Lagers 20, der sich im Gegensatz zum Innenring 22 nicht mit dem Drehteil 17 dreht. Auch bei dem Lagersitzelement 30 handelt es sich also um ein stationäres Bauteil innerhalb des Kopfstücks 10 des Handstücks 100. Die zwischen Deckel 40 und Lagersitzelement 30 wirkende Dichtung 5 unterliegt somit keinem Verschleiß, wie dies erfindungsgemäß angestrebt wird.

Dabei ist allerdings vorgesehen, dass die Dichtwirkung nicht dauerhaft vorliegt. Das Dichtelement 5 soll dementsprechend auch ein Ventil darstellen, welches zwar zeitweise das Ausströmen von Luft ermöglicht, allerdings das Eindringen von Umgebungsluft in den Kopfbereich verhindert. Das Dichtelement 5 bildet hierbei ein sogenanntes Schirm- bzw. Regenschirmventil, welches für den Fall, dass innerhalb des Kopfstücks 10 ein Überdruck vorliegt, öffnet, in anderen Fällen hingegen schließt und wie oben beschrieben eine Abdichtung zwischen dem Deckel 5 und dem Lagersitzelement 30 bewirkt.

Die Abmessungen und das Material des Dichtelements 5 sind dementsprechend derart gewählt, dass die oben erläuterte Ventilfunktion realisiert werden kann, wobei insbesondere angestrebt wird, dass bei einem Überdruck von etwa 0,3 bar das Ventil öffnet, in anderen Fällen allerdings schließt und hierbei mit einer entsprechenden Vorspannung an dem Lagersitzelement 30 anliegt. Neben der in den Figuren erkennbaren konkav gekrümmten Ausgestaltung ist dementsprechend vorgesehen, dass der Außendurchmesser des Ventilelements 5 etwa 7 bis 8 mm beträgt, die Breite des Dichtelements 5, also der Abstand des Randbereichs der zentralen Öffnung 6 zum Außenumfang 7 beträgt etwa 2 bis 2,5 mm. Abhängig von dem gewählten Material sowie den Abmessungen des Handstücks 100 können diese Parameter allerdings auch variieren.

Bei dem Material für das Dichtelement 5 handelt es sich vorzugsweise um ein sterilisierbares Material. Dieses muss wie bereits erwähnt eine gewisse Flexibilität aufweisen, weshalb es sich insbesondere um ein Elastomer, besonders bevorzugt um ein temperaturbeständiges Elastomer handelt. Als besonders bevorzugt hat sich die Verwendung eines sog. Fluorelastomers (z.B. PTFE) herausgestellt, wobei das Dichtelement 5 eine Dicke von etwa 0,2 mm +/- 0,1 mm aufweist.

Entscheidend ist, dass im aktivierten Zustand des Handstücks 100, der in Figur 1 dargestellt ist und bei dem wie bereits erwähnt im Innenbereich des Kopfstücks 10 ein Überdruck vorherrscht, das Dichtelement 5 öffnet. Wie in Figur 1 erkennbar ist, weist in dieser Situation der äußere Randbereich 7 des Dichtelements 5 einen geringen Abstand zur stirnseitigen Dichtfläche 33 des Lagersitzelements 30 auf. Im aktivierten Zustand des Handstücks 100 kann also Luft von innen nach außen strömen. Gleichzeitig verhindert der Überdruck im Innenbereich, dass gegebenenfalls kontaminierte Luft von außen eindringen kann.

Wird nun die Druckluftzufuhr beendet, so wird der im Innenbereich des Handstückkopfs 10 vorliegende Druck fallen und während einer Abbremsphase sogar kurzfristig ein Unterdruck im Vergleich zur Umgebung vorliegen. Fällt hierbei insbesondere der Druck unter einen Wert von etwa 0,3 bar (im Vergleich zum Umgebungsdruck), so schließt das Dichtelement 5 wie in Figur 2 gezeigt und dessen Außenumfang 7 ist nunmehr in Anlage gegen die ringartige Dichtfläche 33 des Lagersitzelements 30. Diese Abdichtung liegt dabei nicht nur während der Abbremsphase, sondern auch im deaktivierten Zustand des Handstücks 100 vor. Mit anderen Worten, das Dichtelement 5 öffnet nur im aktivierten Zustand des Handstücks 100 und sorgt in allen anderen Zeiträumen für eine effiziente Abdichtung des oberen Kopfbereichs 10. Hierdurch ist sichergestellt, dass keine Umgebungsluft in den Bereich des oberen Lagers 20 eintreten kann, wie dies gewünscht ist.

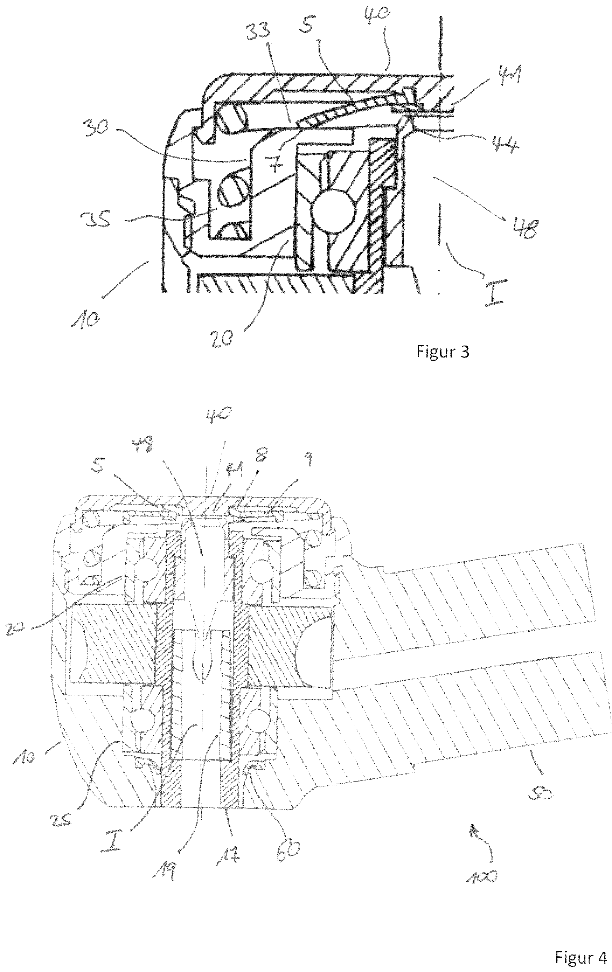

Bei dem in Figur 1 sowie in Figur 2 auf der rechten Seite dargestellten Ausführungsbeispiel ist das Dichtelement 5 einstückig ausgeführt und unmittelbar an dem Vorsprung 41 des Deckels 40 formschlüssig befestigt. Auf der linken Seite von Figur 2 bzw. in vergrößerter Ansicht in Figur 3 ist eine alternative Befestigungsmöglichkeit für das Dichtelement 5 dargestellt, wobei hier als Befestigungselement ein ringartiger sog. Niederhalter 44 zum Einsatz kommt, der auf den Vorsprung 41 des Deckels aufgepresst oder anderweitig mit diesem verbunden (z.B. verklebt) ist und hierbei das Dichtelement 5 klemmend in der dargestellten Position hält. Der Niederhalter 44, der gegebenenfalls auch mit dem Dichtelement 5 verbunden, beispielsweise verklebt sein kann, besteht in diesem Fall im Vergleich zu dem eigentlichen Dichtelement 5 aus einem stabileren Material, wobei hier wiederum Kunststoff oder auch Metall denkbar wäre. Das Dichtelement 5 kann in diesem Fall an seinem Innenrandbereich abgewinkelt ausgestaltet sein, wie dies in Figur 3 erkennbar ist, um die Abdichtung gegenüber dem Deckel 40 weiter zu verbessern. Hinsichtlich seiner weiteren Ausgestaltung und Funktion gleicht diese Variante derjenigen von Figur 2.

Wie ferner die in Figur 4 dargestellte dritte Ausführungsform zeigt, wäre es ebenfalls denkbar, dass Dichtelement 5 mehrteilig auszugestalten. In diesem Fall besteht das Dichtelement 5 zunächst aus einem ringartigen Innenbereich 8, der wiederum am zentralen Vorsprung 41 des Deckels 40 in der oben beschriebenen Weise angeordnet und befestigt ist. Am Außenumfang des Innenbereichs 8 ist dann ein ringartiger Dichtbereich 9 ausgebildet, der aus einem flexibleren Material gebildet ist und analog zu der anhand der Figuren 1 und 2 beschriebenen Vorgehensweise mit der ringartigen Dichtfläche 33 des Lagersitzelements 30 zusammenwirkt.

Im dargestellten Ausführungsbeispiel ist dieser Dichtbereich 9 wie erkennbar abgewinkelt ausgeführt, wobei dann der am Außenumfang gebildete, auf das Lagersitzelement 30 ausgerichtete Steg mit seiner Stirnfläche auf die entsprechende Dichtfläche 33 des Lagersitzelements 30 drückt, wie dies auf der linken Seite von Figur 4 erkennbar ist. Dieser Zustand liegt wie bereits erwähnt während einer Abbremsphase des Handstücks 100 bzw. im nicht aktiven Zustand des Handstücks 100 vor. Im aktivierten Zustand hingegen führt wiederum der im Kopfbereich 10 vorliegende Überdruck dazu, dass im Rahmen der Ventilfunktion das Dichtelement 5 öffnet, sodass der umlaufende Steg nunmehr von der Oberseite des Lagersitzelements 30 beabstandet ist. Diese Situation ist auf der rechten Seite von Figur 4 erkennbar. Für das Material des Dichtbereichs 9 gilt das oben Gesagte. Es handelt sich also insbesondere um ein temperaturbeständiges Material mit einer zum Erzielen der Ventilfunktion geeignet Flexibilität, beispielsweise um ein Fluorelastomer.

Figur 4 zeigt weiterhin, dass auch an der dem Deckel 40 gegenüberliegenden Seite des Drehteils 17 eine Abdichtung Des Kopfteils 10 vorgesehen sein kann. Hier besteht allerdings im Vergleich zu der erfindungsgemäßen Lösung nicht die Möglichkeit, eine Abdichtung zwischen zwei stationären Komponenten des Handstückkopfs 10 vorzunehmen. Stattdessen ist nun am Innenwandbereich des Kopfgehäuses unterhalt des Lagers 25 eine ringartige Dichtlippe 60 vorgesehen, die mit dem Außenumfang des Drehteils 17 zusammenwirkt. Auch diese Dichtlippe 60 besitzt vorzugsweise eine Ventilfunktion, sodass sie bei Vorhandensein eines ausreichenden Überdrucks innerhalb des Handstücks 100 von dem Außenumfang des Drehteils 17 beabstandet ist, wie wiederum die rechte Seite von Figur 4 zeigt. Lediglich während der Abbremsphase sowie im nicht aktivierten Zustand hingegen erfolgt ein dichtendes Anliegen entsprechend der Darstellung auf der linken Seite.

Da diese Dichtung 60 nunmehr allerdings mit einem sich drehenden Bauteil, im vorliegenden Fall mit dem Drehteil 17 zusammenwirkt, unterliegt diese Dichtlippe 60 zwangsläufig einem gewissen Verschleiß, was bei der erfindungsgemäßen Abdichtung im oberen Bereich des Handstückkopfs 10 nicht der Fall ist. Trotz allem stellt die im Bereich der Einstecköffnung 18 vorgesehene Dichtlippe 60 eine sinnvolle Ergänzung dar, um insgesamt eine zufriedenstellende Abdichtung des Handstückkopfs 10 erzielen zu können. Dementsprechend kann diese zusätzliche Dichtlippe 60 grundsätzlich auch bei den weiteren Ausführungsbeispielen des erfindungsgemäßen Dichtelements 5 vorgesehen sein.

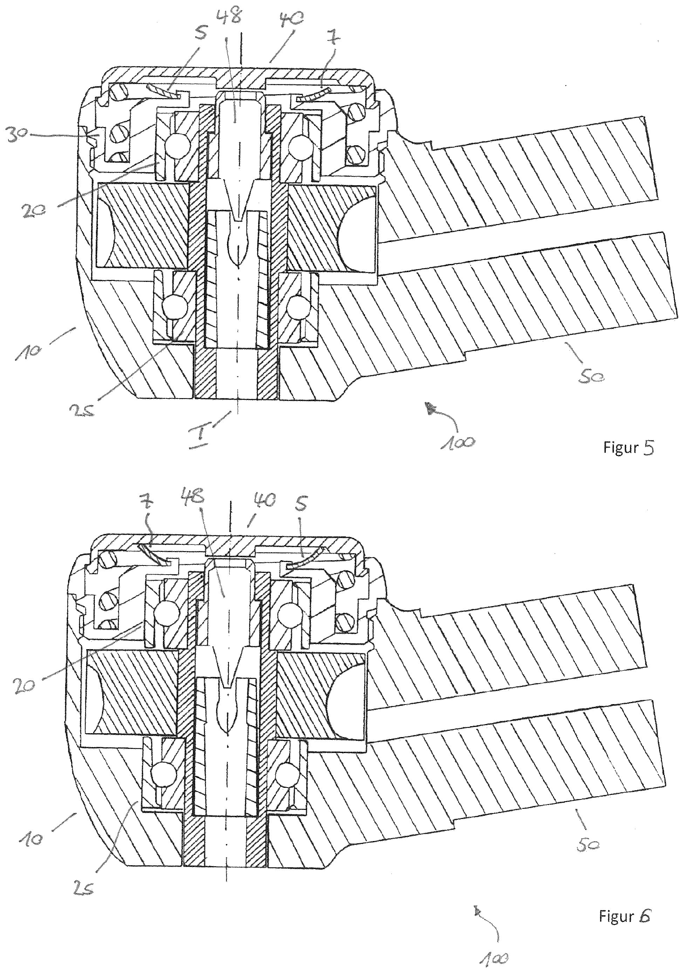

Ein viertes erfindungsgemäßes Ausführungsbeispiel ist in den Figuren 5 und 6 gezeigt. Dieses ist dem Ausführungsbeispiel der Figuren 1 und 2 sehr ähnlich, wobei nunmehr allerdings das Dichtelement 5 am Lagersitzelement 30 fest angeordnet ist und abhängig vom Druck im Innenraum des Handstückkopfs 10 mit der Unterseite des Deckels 40 zusammenwirkt.

Wiederum ist also das Dichtelement 5 als Schirmventil ausgeführt, derart, dass es sich ausgehend von dem Bereich der Befestigung an dem Lagersitzelement 30 konkav krümmend in Richtung des Deckels 40 erstreckt, wobei allerdings im Falle eines im Handstückkopf 10 vorliegenden Überdrucks der Randbereich des Dichtelements 5 von dem Deckel 40 beabstandet ist (Figur 5), während der Abbremsphase bzw. im deaktivierten Zustand des Handstücks 100 hingegen eine Abdichtung erfolgt (Figur 6). Dabei wäre es auch in diesem Fall denkbar, das Dichtelement 5 analog zu der Variante in Figur 4 mehrteilig auszugestalten bzw. entsprechend der Ausführungsform von Figur 3 mit Hilfe eines weiteren Elements an dem Lagersitzelement 30 klemmend zu halten.

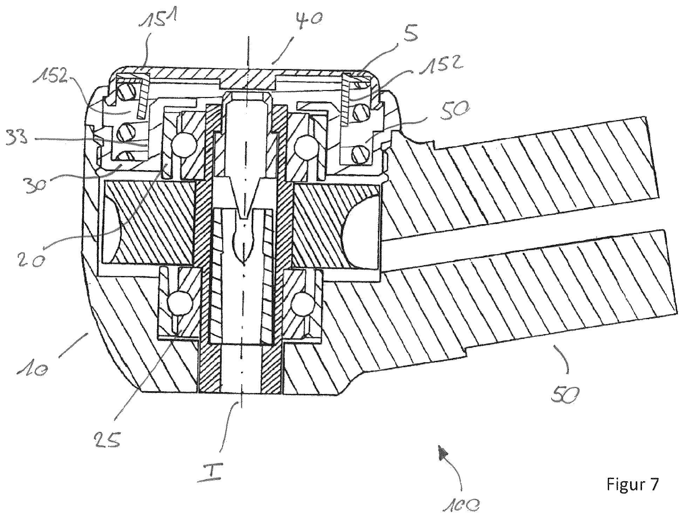

Ein fünftes Ausführungsbeispiel ist schließlich in Figur 7 gezeigt, wobei nunmehr das Dichtelement rotationsförmig mit einem abgewinkelten, ringartig umlaufenden Profil ausgebildet ist. Ein erster, flanschartig nach außen weisender Schenkel 151 des Profils ist hierbei im Wesentlichen parallel zu dem Deckel 40 ausgerichtet und an diesem befestigt, wobei hierzu der Deckel 40 ggf. eine umlaufende, ringartige Vertiefung oder Aufnahme aufweisen kann. An der Innenseite des ersten Schenkels 151 erstreckt sich im Wesentlichen senkrecht hierzu ein zweiter Schenkel 152, der dazu ausgebildet ist, mit Vorspannung gegen die die Dichtfläche 33 bildende Seitenfläche des Lagersitzelements 30 zu drücken. Dieser zweite Schenkel 152 bewirkt also die gewünschte Abdichtung und erfüllt gleichzeitig auch die Ventilfunktion. Wie nämlich auf der linken Seite von Figur 7 gezeigt ist (auf der rechten Seite liegt der zweite Schenkel 152 als Dichtlippe am Lagersitzelement 30 außen an), wird der zweite Schenkel 152 bei entsprechendem Überdruck seitlich ausgelenkt und löst sich hierbei von dem Lagersitzelement 30. Wiederum ist hierfür vorzugsweise ein Überdruck von etwa 0,3 bar erforderlich. Die Abmessungen der Schenkel 151, 152 sind hierbei derart gewählt, dass sich der zweite Schenkel 152 innerhalb der Spiralfeder 50 befindet und somit deren Funktion nicht beeinträchtigt.

Auch in diesem Fall kann das Dichtelement 5 durchgängig aus dem gleichen Material bestehen oder alternativ hierzu aus unterschiedlichen Materialien gebildet sein, wobei analog zu den oben erläuterten Varianten in diesem Fall dann wiederum der zweite Schenkel 152 vorzugsweise aus einem etwas flexibleren Material besteht.

Bei allen gezeigten Ausführungsbeispielen wäre auch denkbar, dass das Dichtelement 5 zwischen dem ebenfalls stationären Außenlagerring 21 des oberen Lagers 20 und dem Deckel 40 wirksam ist. Auch in diesem Fall ist sichergestellt, dass von der Oberseite her keine Außenluft in den Bereich des Lagers 20 eindringen kann.

Die Abmessungen und die Form des Dichtelements 5 können wie bereits erwähnt variabel gestaltet werden, solange die gewünschte Ventilwirkung erzielt wird. Vorzugsweise ist das Dichtelement 5 allerdings derart ausgeführt, dass es sich vollständig innerhalb der Spiralfeder 30 befindet und somit deren Funktion nicht beeinträchtigt. Diese ist in einer umlaufenden Nut 31 des Lagersitzelements 30 aufgenommen und sollte störungsfrei den Deckel 40 in seine obere Ausgangsposition vorspannen. Bei dem fünften Ausführungsbeispiel der Figur 7 befindet sich bereits erwähnt zumindest der zweite Schenkel innerhalb der Spiralfeder 50.

Insgesamt werden also durch die erfindungsgemäßen Maßnahmen die Möglichkeiten zur Abdichtung des Kopfbereichs eines zahnärztlichen Turbinen-Handstücks deutlich verbessert. Ferner ist sichergestellt, dass ein Verschleiß des hierbei vorgesehenen Dichtelements minimiert oder vorzugsweise sogar vollständig ausgeschlossen wird.

## Patentansprüche

1. Medizinisches, insbesondere dentalmedizinisches Turbinen-Handstück (100) mit einer Griffhülse (50) und einem Kopfstück (10), welches an einem vorderen Ende der Griffhülse (50) angeordnet ist und eine Werkzeugaufnahmeöffnung (18) aufweist,
wobei die Griffhülse eine Fluidleitung (51) zur Zufuhr eines Fluids zum Antrieb eines Turbinenrades (16) aufweist,
wobei im Inneren des Kopfstücks (10) das Turbinenrad (16) und ein Haltemittel (19) zur drehbaren Halterung eines Behandlungswerkzeugs, angeordnet sind,
wobei das Haltemittel (19) entlang einer Drehachse (I) für das Behandlungswerkzeug angeordnet ist,
wobei im Inneren des Kopfstücks (10) entlang der Drehachse (I) ferner ein Löseelement (48) angeordnet ist, welches dazu ausgebildet ist, mit dem Haltemittel (19) zu interagieren, wobei das Löseelement (48) bei einer Interaktion mit dem Haltemittel (19) die Halterung des Behandlungswerkzeugs löst,
wobei das Kopfstück (10) weiterhin einen der Werkzeugaufnahmeöffnung (18) gegenüberliegenden Deckel (40) aufweist, der in Richtung der Drehachse (I) zwischen einer Ruhestellung, in der der Deckel (40) von dem Löseelement (48) beabstandet ist, und einer Betätigungsstellung, in der der Deckel (40) auf das Löseelement (48) drückt, um die Halterung des Behandlungswerkzeugs zu lösen, verstellbar ist,
und wobei in dem Kopfstück (10) ein Dichtelement (5) angeordnet ist,
**dadurch gekennzeichnet,**
**dass** das Dichtelement (5) zwischen dem Deckel (40) und einem stationären Lagerelement (30), welches das Haltemittel (19) ringartig umgibt, wirksam ist,
wobei das Dichtelement (5) entweder an dem Deckel (40) oder dem Lagerelement (30) befestigt ist und mit Vorspannung gegen eine Dichtfläche (33) des Lagerelements (30) bzw. des Deckels (40) drückt, und
wobei das Dichtelement (5) als Ventil ausgeführt und dazu ausgebildet ist, sich im aktivierten Zustand des Handstücks (100) von der Dichtfläche (33) zu lösen.

2. Medizinisches Handstück nach Anspruch 1,
**dadurch gekennzeichnet,**
**dass** das Dichtelement (5) als Schirmventil mit einem kreisförmigen Außenumfang ausgebildet ist,
wobei das Dichtelement (5) vorzugsweise derart ausgebildet ist, dass es bei einem Überdruck des Fluides von etwa 0,3 bar öffnet.

3. Medizinisches Handstück nach Anspruch 2,
**dadurch gekennzeichnet,**
**dass** das Dichtelement (5) ringartig ausgebildet ist und eine zentrale Öffnung aufweist, die mit ihrem Rand (6) an dem Deckel (40) bzw. dem Lagerelement (30) anliegt.

4. Medizinisches Handstück nach Anspruch 3,
**dadurch gekennzeichnet,**
**dass** der Deckel (40) bzw. das Lagerelement (30) eine umlaufende Nut (42) aufweist, in welche das Dichtelement (5) mit dem Randbereich der zentralen Öffnung eingepresst ist.

5. Medizinisches Handstück nach Anspruch 3,
**dadurch gekennzeichnet,**
**dass** das Dichtelement (5) mit Hilfe eines separaten, insbesondere ringartigen Befestigungselements (44) klemmend an dem Deckel (40) bzw. dem Lagerelement (30) gehalten ist.

6. Medizinisches Handstück nach einem der Ansprüche 2 bis 5,
**dadurch gekennzeichnet,**
**dass** das Dichtelement (5) ausgehend von dem Deckel (40) oder dem Lagerelement (30), an dem das Dichtelement (5) befestigt ist, sich in Richtung der Dichtfläche des Lagerelements (30) bzw. des Deckels (40) erstreckt, derart, dass der Randbereich (7) des Dichtelements im geschlossenen Zustand des Ventils an der Dichtfläche (33) anliegt.

7. Medizinisches Handstück nach Anspruch 6,
**dadurch gekennzeichnet,**
**dass** das Dichtelement (5) konkav gewölbt oder abgewinkelt konkav ausgebildet ist.

8. Medizinisches Handstück nach Anspruch 1,
**dadurch gekennzeichnet,**
**dass** das Dichtelement (5) rotationsförmig mit einem abgewinkelten, ringartig umlaufenden Profil ausgebildet ist,
wobei ein erster, vorzugsweise nach außen weisender Schenkel (151) des Profils im Wesentlichen parallel zu dem Deckel (40) ausgerichtet und an diesem befestigt ist, und
wobei ein zweiter Schenkel (152) des Profils sich im Wesentlichen senkrecht zum ersten Schenkel (151) erstreckt und dazu ausgebildet ist, mit Vorspannung gegen ein die Dichtfläche (33) bildende Seitenfläche des Lagerelements (30) zu drücken und im aktivierten Zustand des Handstücks (100) ausgelenkt zu werden.

9. Medizinisches Handstück nach einem der vorherigen Ansprüche,
**dadurch gekennzeichnet,**
**dass** das Dichtelement (5) einstückig aus einem flexiblen Material gebildet ist.

10. Medizinisches Handstück nach einem der Ansprüche 1 bis 6,
**dadurch gekennzeichnet,**
**dass** das Dichtelement (5) mehrteilig mit einem Innenbereich (8) zur Befestigung an dem Deckel (40) bzw. dem Lagerelement (30) sowie einem an dem Innenbereich (8) befestigten ringartigen Dichtbereich (9) ausgebildet ist, der aus einem flexiblen Material besteht.

11. Medizinisches Handstück nach Anspruch 9 oder 10,
**dadurch gekennzeichnet,**
**dass** es sich bei dem flexiblen Material um ein Elastomer handelt, vorzugsweise um ein temperaturbeständiges Elastomer, besonders bevorzugt ein Fluorelastomer,
wobei die Dicke des flexiblen Materials vorzugsweise im Bereich von 0,2 mmm +/- 0,1 mm liegt.

12. Medizinisches Handstück nach einem der vorherigen Ansprüche,
**dadurch gekennzeichnet,**
**dass** das Lagerelement (30) durch den stationären Außenlagerring eines das Haltemittel (19) drehbar lagernden Drehlagers (20) gebildet ist.

13. Medizinisches Handstück nach einem der Ansprüche 1 bis 11,
**dadurch gekennzeichnet,**
**dass** das Lagerelement (30) durch ein Lagersitzelement gebildet ist, welches ein Drehlager (20) zur drehbaren Halterung des Haltemittels (19) hält.

14. Medizinisches Handstück nach einem der vorherigen Ansprüche,
**dadurch gekennzeichnet,**
**dass** der Deckel (40) mit Hilfe eines Federelements (35), vorzugsweise mittels einer Spiralfeder in die Ruhestellung vorgespannt gelagert ist, wobei das Dichtelement (5) in einer Projektion senkrecht zur Drehachse (I) innerhalb des Federelements (35) angeordnet ist.

15. Medizinisches Handstück nach einem der vorherigen Ansprüche,
**dadurch gekennzeichnet,**
**dass** dieses dem Deckel (40) gegenüberliegend ein weiteres, ringartiges Dichtelement (60) aufweist, welches zwischen dem Außenumfang des Haltemittels (19) oder eines das Haltemittel (19) haltenden Drehteils (19) sowie einem umgebenden Wandbereich des Kopfstücks (10) wirksam ist.

## Claims

1. Medical, in particular dentistry, turbine handpiece (100) having a gripping sleeve (50) and a head piece (10) which is disposed on a front end of the gripping sleeve (50) and has a tool receptacle opening (18),
wherein the gripping sleeve has a fluid line (51) for supplying a fluid for driving a turbine wheel (16), wherein the turbine wheel (16) and a holding means (19) for rotatably mounting a treatment tool are disposed in the interior of the head piece (10),
wherein the holding means (19) is arranged along a rotation axis (I) for the treatment tool, and
wherein furthermore disposed in the interior of the head piece (10) along the rotation axis (I) is a releasing element (48) which is configured to interact with the holding means (19), wherein the releasing element (48) when interacting with the holding means (19) releases the mounting of the treatment tool,
wherein the head piece (10) furthermore has a cover (40) which is lies opposite the tool receptacle opening (18) and which is adjustable in the direction of the rotation axis (I) between a resting position, in which the cover (40) is spaced apart from the releasing element (48), and an activating position, in which the cover (40) presses on the releasing element (48) in order to release the mounting of the treatment tool,
and wherein a sealing element (5) is disposed in the head piece (10),
**characterized in that**
the sealing element (5) is effective between the cover (40) and a stationary bearing element (30) which annularly surrounds the holding means (19),
wherein the sealing element (5) is fastened either to the cover (40) or to the bearing element (30), and by way of a preload presses against a sealing surface (33) of the bearing element (30) or of the cover (40), and
wherein the sealing element (5) is embodied as a valve and is configured to be released from the sealing surface (33) in the activated state of the handpiece (100).

2. Medical handpiece according to Claim 1,
**characterized in that**
the sealing element (5) is configured as an umbrella valve with a circular external circumference,
wherein the sealing element (5) is preferably configured in such a manner that it opens in the event of a positive pressure of fluid of approximately 0.3 bar.

3. Medical handpiece according to Claim 2,
**characterized in that**
the sealing element (5) is of annular configuration and has a central opening which by way of its periphery (6) rest on the cover (40) or the bearing element (30).

4. Medical handpiece according to Claim 3,
**characterized in that**
the cover (40) or the bearing element (30) has an encircling groove (42) into which the sealing element (5) is pressed by way of the peripheral region of the central opening.

5. Medical handpiece according to Claim 3,
**characterized in that**
the sealing element (5) is held in a clamping manner on the cover (40) or the bearing element (30) with the aid of a separate, in particular annular, fastening element (44).

6. Medical handpiece according to one of Claims 2 to 5,
**characterized in that**
the sealing element (5), proceeding from the cover (40) or the bearing element (30) to which the sealing element (5) is fastened, extends in the direction of the sealing surface of the bearing element (30) or of the cover (40) in such a manner that the peripheral region (7) of the sealing element rests on the sealing surface (33) in the closed state of the valve.

7. Medical handpiece according to Claim 6,
**characterized in that**
the sealing element (5) is configured to be concavely curved or concavely angular.

8. Medical handpiece according to Claim 1,
**characterized in that**
the sealing element (5) is configured in a rotationally shaped manner, having an angular, annularly encircling profile,
wherein a first, preferably outwardly pointing leg (151) of the profile is aligned substantially parallel to the cover (40) and fastened thereto, and
wherein a second leg (152) of the profile extends substantially perpendicular to the first leg (151) and is configured to press by way of a preload against a lateral surface of the bearing element (30) that forms the sealing surface (33) and to be deflected in the activated state of the handpiece (100).

9. Medical handpiece according to one of the preceding claims,
**characterized in that**
the sealing element (5) is formed in one piece from a flexible material.

10. Medical handpiece according to one of Claims 1 to 6,
**characterized in that**
the sealing element (5) is formed in multiple parts with an inner region (8) for fastening to the cover (40) or to the bearing element (30), and an annular sealing region (9) which is fastened to the inner region (8) and consists of a flexible material.

11. Medical handpiece according to Claim 9 or 10,
**characterized in that**
the flexible material is an elastomer, preferably a temperature-resistant elastomer, particularly preferably a fluoroelastomer,
wherein the thickness of the flexible material is preferably in the range of 0.2 mm +/- 0.1 mm.

12. Medical handpiece according to one of the preceding claims,
**characterized in that**
the bearing element (30) is formed by the stationary outer bearing ring of a rotary bearing (20) which rotatably mounts the holding means (19).

13. Medical handpiece according to one of Claims 1 to 11,
**characterized in that**
the bearing element (30) is formed by a bearing seat element which holds a rotary bearing (20) for rotatably mounting the holding means (19).

14. Medical handpiece according to one of the preceding claims,
**characterized in that**
the cover (40) is mounted with the aid of a spring element (35), preferably by means of a helical spring, so as to be preloaded to the resting position, wherein the sealing element (5), in a projection perpendicular to the rotation axis (I), is disposed within the spring element (35).

15. Medical handpiece according to one of the preceding claims,
**characterized in that**
said medical handpiece has, opposite the cover (40), a further, annular sealing element (60) which is effective between the external circumference of the holding means (19), or of a rotary part (19) holding the holding means (19), and a surrounding wall region of the head piece (10).

## Revendications

1. Pièce à main (100) de turbine médicale, en particulier dentaire, avec un manchon de préhension (50) et une pièce de tête (10), qui est disposée sur une extrémité avant du manchon de préhension (50) et comporte une ouverture de réception d'outil (18),
le manchon de préhension comportant une conduite de fluide (51) destinée à amener un fluide pour l'entraînement d'une roue (16) de turbine,
la roue (16) de turbine et un moyen de maintien (19) destiné à maintenir de manière rotative un outil de traitement étant disposés à l'intérieur de la pièce de tête (10),
le moyen de maintien (19) étant disposé le long d'un axe de rotation (I) pour l'outil de traitement,
un élément de desserrage (48) étant disposé en outre à l'intérieur de la pièce de tête (10) le long de l'axe de rotation (I), lequel est formé pour interagir avec le moyen de maintien (19), l'élément de desserrage (48) desserrant le maintien de l'outil de traitement lors d'une interaction avec le moyen de maintien (19),
la pièce de tête (10) comportant par ailleurs un couvercle (40) faisant face à l'ouverture de réception d'outil (18), lequel peut être ajusté en direction de l'axe de rotation (I) entre une position de repos, dans laquelle le couvercle (40) est tenu à distance de l'élément de desserrage (48), et une position d'actionnement, dans laquelle le couvercle (40) exerce une pression sur l'élément de desserrage (48) pour desserrer le maintien de l'outil de traitement,
et un élément d'étanchéité (5) étant disposé dans la pièce de tête (10),
**caractérisée en ce**
**que** l'élément d'étanchéité (5) est actif entre le couvercle (40) et un élément de palier (30) stationnaire, lequel entoure à la manière d'un anneau le moyen de maintien (19),
l'élément d'étanchéité (5) étant fixé soit sur le couvercle (40) soit l'élément de palier (30) et exerçant une pression avec une précontrainte contre une surface étanche (33) de l'élément de palier (30) ou du couvercle (40), et
l'élément étanche (5) étant réalisé comme une soupape et étant formé pour se desserrer de la surface étanche (33) dans l'état activé de la pièce à main (100).

2. Pièce à main médicale selon la revendication 1,
**caractérisée en ce**
**que** l'élément étanche (5) est formé comme une soupape de protection avec une périphérie extérieure circulaire,
l'élément étanche (5) étant formé de préférence de manière à s'ouvrir en présence d'une surpression du fluide d'environ 0,3 bar.

3. Pièce à main médicale selon la revendication 2,
**caractérisée en ce**
**que** l'élément étanche (5) est formé à la manière d'un anneau et comporte une ouverture centrale qui repose par son bord (6) sur le couvercle (40) ou l'élément de palier (30).

4. Pièce à main médicale selon la revendication 3,
**caractérisée en ce**
**que** le couvercle (40) ou l'élément de palier (30) comporte une rainure (42) périphérique, dans laquelle l'élément étanche (5) est enfoncé avec la zone de bord de l'ouverture centrale.

5. Pièce à main médicale selon la revendication 3,
**caractérisée en ce**
**que** l'élément étanche (5) est maintenu sur le couvercle (40) ou l'élément de palier (30) par serrage à l'aide d'un élément de fixation (44) séparé, en particulier de type annulaire.

6. Pièce à main médicale selon l'une des revendications 2 à 5,
**caractérisée en ce**
**que** l'élément étanche (5) s'étend en direction de la surface étanche de l'élément de palier (30) ou du couvercle (40) en partant du couvercle (40) ou de l'élément de palier (30), sur lequel l'élément étanche (5) est fixé de telle manière que la zone de bord (7) de l'élément étanche repose sur la surface étanche (33) dans l'état fermé de la soupape.

7. Pièce à main médicale selon la revendication 6,
**caractérisée en ce**
**que** l'élément étanche (5) est formé avec un bombement concave ou avec un coude concave.

8. Pièce à main médicale selon la revendication 1,
**caractérisée en ce**
**que** l'élément étanche (5) est formé de manière rotative avec un profilé coudé, périphérique à la manière d'un anneau,
une première branche (151) pointant de préférence vers l'extérieur du profilé étant orientée sensiblement parallèlement au couvercle (40) et étant fixée sur celui-ci,
une deuxième branche (152) du profilé s'étendant sensiblement perpendiculairement à la première branche (151) et étant formée pour exercer une pression avec une précontrainte contre une surface latérale de l'élément de palier (30) formant la surface étanche (33) et pour être déviée dans l'état activé de la pièce à main (100).

9. Pièce à main médicale selon l'une des revendications précédentes,
**caractérisée en ce**
**que** l'élément étanche (5) est formé d'un seul tenant à partir d'un matériau flexible.

10. Pièce à main médicale selon l'une des revendications 1 à 6,
**caractérisée en ce**
**que** l'élément étanche (5) est formé en plusieurs parties avec une zone intérieure (8) destinée à être fixée sur le couvercle (40) ou l'élément de palier (30) ainsi qu'avec une zone étanche (9) de type annulaire fixée sur la zone intérieure (8), qui est constituée d'un matériau flexible.

11. Pièce à main médicale selon la revendication 9 ou 10,
**caractérisée en ce**
**que** le matériau flexible est un élastomère, de préférence un élastomère résistant aux températures, de manière particulièrement préférée un élastomère fluoré,
l'épaisseur du matériau flexible se situant de préférence dans la plage de 0,2 mm +/- 0,1 mm.

12. Pièce à main médicale selon l'une des revendications précédentes,
**caractérisée en ce**
**que** l'élément de palier (30) est formé par la bague de palier extérieur stationnaire d'un palier rotatif (20) supportant de manière rotative l'élément de maintien (19).

13. Pièce à main médicale selon l'une des revendications 1 à 11,
**caractérisée en ce**
**que** l'élément de palier (30) est formé par un élément de siège de palier, lequel maintient un palier rotatif (20) pour le maintien rotatif du moyen de maintien (19).

14. Pièce à main médicale selon l'une des revendications précédentes,
**caractérisée en ce**
**que** le couvercle (40) est supporté de manière précontrainte dans la position de repos à l'aide d'un élément à ressort (35), de préférence au moyen d'un ressort hélicoïdal, l'élément étanche (5) étant disposé à l'intérieur de l'élément à ressort (35) dans une projection perpendiculairement à l'axe de rotation (I).

15. Pièce à main médicale selon l'une des revendications précédentes,
**caractérisée en ce**
**que** celle-ci comporte un autre élément étanche (60) de type anneau faisant face au couvercle (40), lequel est actif entre la périphérie extérieure du moyen de maintien (19) ou d'une partie rotative (19) maintenant le moyen de maintien (19) et une zone de paroi l'entourant de la pièce de tête (10).
